# EUROPEAN PATENT SPECIFICATION

(11) **EP 3 620 719 B1**
(45) Date of publication and mention of the grant of the patent: **12.10.2022**
(21) Application number: 19191659.2
(22) Date of filing: 14.08.2019
(51) Int. Cl.: F23R 3/28

(54) **GAS TURBINE COMBUSTOR**
GASTURBINENBRENNKAMMER
CHAMBRE DE COMBUSTION DE TURBINE À GAZ

(30) Priority: 05.09.2018 JP 2018165734
(43) Date of publication of application: 11.03.2020
(73) Proprietor: Mitsubishi Heavy Industries, Ltd., Chiyoda-ku, Tokyo 100-8332 (JP)
(72) Inventor: AKIYAMA, Yasuhiro, Yokohama-shi, Kanagawa 220-8401 (JP); KAMIKAWA, Yuki, Yokohama-shi, Kanagawa 220-8401 (JP); ASAI, Tomohiro, 100-8332, Tokyo (JP); KARISHUKU, Mitsuhiro, Yokohama-shi, Kanagawa 220-8401 (JP); HAGITA, Tatsuya, Yokohama-shi, Kanagawa 220-8401 (JP); MATSUBARA, Yoshinori, Yokohama-shi, Kanagawa 220-8401 (JP)
(74) Representative: MERH-IP Matias Erny Reichl Hoffmann Patentanwälte PartG mbB

(56) References cited:
- EP-A1- 0 029 619
- EP-A2- 1 826 485
- JP-A- 2007 232 325
- JP-A- 2011 058 775
- US-A1- 2009 031 728
- US-A1- 2010 212 322

## Description

### Technical Field

The present invention relates to a gas turbine combustor.

### Background

In a thermal power plant, it is examined to improve power generation efficiency and to positively utilize hydrogen-containing fuels other than fossil fuels as means for reducing an emission of carbon dioxide (CO₂) which induces global warming.

It is effective to increase an turbine inlet temperature of a gas turbine of a gas turbine power generation facility in the thermal power plant for improvement of the power generation efficiency.

However, since emissions of nitrogen oxides (NOx) which are environmental pollutants are increased with an increase of the turbine inlet temperature of the gas turbine, a reduction in NOx emissions becomes a technical issue in addition to improvement of the power generation efficiency and a low NOx combustion type for the gas turbine combustor which would cope with the hydrogen-containing fuels in addition to the increase of turbine inlet temperature is sought for.

In general, there exist a diffusion combustion type and a premixed combustion type as the low NOx combustion type for the gas turbine combustor.

The diffusion combustion type is a form that a fuel is injected directly into a combustion chamber of the gas turbine combustor and the fuel is mixed with air in the combustion chamber, and a flame is formed from a region where they are mixed together to an air ratio (a stoichiometric mixture ratio) which is necessary for perfect combustion of the fuel in the combustion chamber. Therefore, there is no possibility of a flashback to the upstream side of the combustion chamber and auto ignition in a fuel supply system and combustion stability can be ensured. However, since the flame is formed in the region where the fuel and air are mixed together to the stoichiometric mixture ratio in the combustion chamber, a high-temperature flame is locally formed. Since, in a region where the high-temperature flame is locally formed, the NOx emissions are large and it is necessary to reduce the NOx emissions by injecting inert media such as nitrogen, water, and steam, power of an auxiliary machine which supplies the inert media becomes necessary and there is the possibility that the power generation efficiency may be lowered.

On the other hand, the premixed combustion type is a form that the fuel and air are mixed together in advance and then are supplied to the combustion chamber and is able to burn the fuel leanly and therefore is able to reduce the NOx emissions. However, since a temperature of combustion air is increased with the increase of the turbine inlet temperature and a concentration of the fuel in a pre-mixer which mixes the fuel with air is increased, there is the possibility that a structure of the gas turbine combustor may be burned out due to the flashback and it is feared that reliability may be lowered.

In a case of a gas turbine combustor which copes with the hydrogen-containing fuels such as the abovementioned ones, since hydrogen is high in adiabatic flame temperature in the stoichiometric mixture ratio in comparison with natural gases, the NOx emissions in the diffusion combustion type are increased. On the other hand, when the hydrogen-containing fuels are used in the premixed combustion type, since hydrogen is small in ignition energy and is fast in combustion velocity, the possibility that the flame may flow back into the pre-mixer and the auto ignition may occur in the pre-mixer becomes high.

In order to solve such issues, in Japanese Unexamined Patent Application Publication No. 2003-148734 (Patent Literature 1), a gas turbine combustor in which a plurality of fuel nozzles and a plurality of air holes which are arranged on the upstream side of a combustion chamber are coaxially arranged and the fuel and air are supplied to the combustion chamber as a coaxial flow is disclosed. In this gas turbine combustor, the fuel and air are dispersedly supplied as the coaxial flow and thereby mixing is rapidly accelerated to make it possible to reduce the NOx emissions. In addition, a mixing length can be made short and the flashback is prevented.

US 2009/031728 A1 (Patent Literature 2) shows a combustor with a first fuel nozzle and a second fuel nozzle which are disposed near a fuel hole for jetting fuel into an air hole row on an inner peripheral side. The first fuel nozzle is structured to suppress turbulence of surrounding air flow and the second fuel nozzle is structured to promote turbulence of a surrounding air flow. US 2010/212322 A1 (Patent Literature 3) shows an air/fuel premixer comprising, a nozzle disposed at least partially within the peripheral wall comprising an outer annular wall spaced from a peripheral wall so as to define an outer air passage between the peripheral wall and the outer annular wall, an inner annular wall disposed at least partially within and spaced from the outer annular wall , so as to define an inner air passage, and at least one fuel gas annulus between the outer annular wall and the inner annular wall defining a fuel gas passage.

EP 1 826 485 A2 (Patent Literature 4) shows a burner that includes fuel nozzles each for jetting out a fuel and air holes each for jetting out air which are constructed so that each of the fuel nozzles is coaxially disposed with the associated one of the air holes to cause each of the fuel nozzles to jet out the fuel into the associated one of the air holes. The burner further having means for disturbing a flow of the fuel or the flow of the air at an upstream position from a nozzle tip.

JP 2007 232325 A (Patent Literature 5) shows a gas turbine combustor comprising an air hole having a throttle passage which is a passage for allowing air to flow through toward a combustion chamber for burning fuel and air. A fuel nozzle is disposed so that a fuel injection port faces the inside of the air hole, and the tip part of the nozzle is formed in cylindrical shape to positively produce a swirl flow at a part of air flowing into the air hole.

EP 0 029 619 A1 (Patent Literature 6) shows a combustion chamber of a gas turbine provided with a number of tubular elements, in which a premixing norevaporation process takes place between fuel and compressor air. Each tubular element is closed at its combustion chamber-side end by a flame holder provided with one or more openings so that the combustion can only take place downstream of the flame holder.

JP 2001 058775 (Patent Literature 7) shows a gas turbine combustor which includes burners in which a plurality of rows of coaxial nozzles comprising a plurality of fuel nozzles and a plurality of air holes is formed on an air hole plate. A member for generating a turbulence of an air current is provided either at a tip of the fuel nozzle constituting the coaxial nozzle or within a flow passage of the air hole formed on the air hole plate where the tip of the fuel nozzle is positioned.

### Summary of the Invention

However, the gas turbine combustor which is described in Patent Literature 1 is the one in which the NOx emissions are reduced for general gaseous fuels such as natural gases, and to reduce the NOx emissions for the hydrogen-containing fuels and to realize the stable operation of the gas turbine combustor are not disclosed therein.

In addition, in the gas turbine combustor which is described in Patent Literature 1, in a case where the hydrogen-containing fuel is burned in the combustion chamber of the gas turbine combustor, since hydrogen is fast in combustion velocity, a flame which is formed in the combustion chamber of the gas turbine combustor is easy to approach the structure of the gas turbine combustor and thus there is the possibility that the reliability may be lowered. In particular, in a case where momentum of the fuel is high relative to the air which flows in the air hole, there are cases where the fuel cannot follow the air which flows along the channel and a low flow velocity region of the fuel is formed on an outlet part of the air hole, and thus there is the possibility that the flame may flow back into the air hole. When the flame flows back into the air hole, the flame is formed on a leading end part of the fuel nozzle which injects the fuel and inner walls of the air holes and the fuel nozzle are overheated and thus there is the possibility that the reliability may be lowered.

Accordingly, the present invention provides a gas turbine combustor which reduces the NOx emissions for the hydrogen-containing fuels, is improved in reliability and realizes the stable operation.

The above problem is solved by the subject matter of the appended claims. In particular, a gas turbine combustor of the present invention includes a combustion chamber which burns a fuel and air, an air hole plate which is located on an upstream side of the combustion chamber and has air holes which are concentrically arranged plurally in line and plurally in number, and/or fuel nozzles which are arranged plurally in line and plurally in number, and a fuel nozzle inner wall has a fuel nozzle tapered shape which extends in an outer circumferential direction on a leading end part of the fuel nozzle.

According to the present invention, there can be provided the gas turbine combustor which reduces the NOx emissions for the hydrogen-containing fuels, is improved in reliability and realizes the stable operation.

Issues, configurations and effects other than the above will become apparent from the following description of examples.

### Brief Description of the Drawings

Fig. 1 is a whole configuration diagram illustrating a structure of a gas turbine combustor
Fig. 2 is a front view of air holes and an air hole plate in the combustor of figure 1.
Fig. 3 is a sectional diagram of one air hole in a configuration which is not part of the present invention.
Fig. 4 is a sectional diagram of one air hole in a comparative example.
Fig. 5 is a sectional diagram of one air hole according to the present invention.
Fig. 6 is a sectional diagram of one air hole according to another embodiment of the present invention.
Fig. 7 is a front view of a combustor burner according to the present invention.
Fig. 8 is a sectional diagram of the combustor burner in a configuration which is not part of the present invention.

### Detailed Description of Embodiments

In the following, examples of the present invention will be described by using the drawings. Incidentally, the same symbols are assigned to the same configurations and there are cases where description of duplicated parts is omitted.

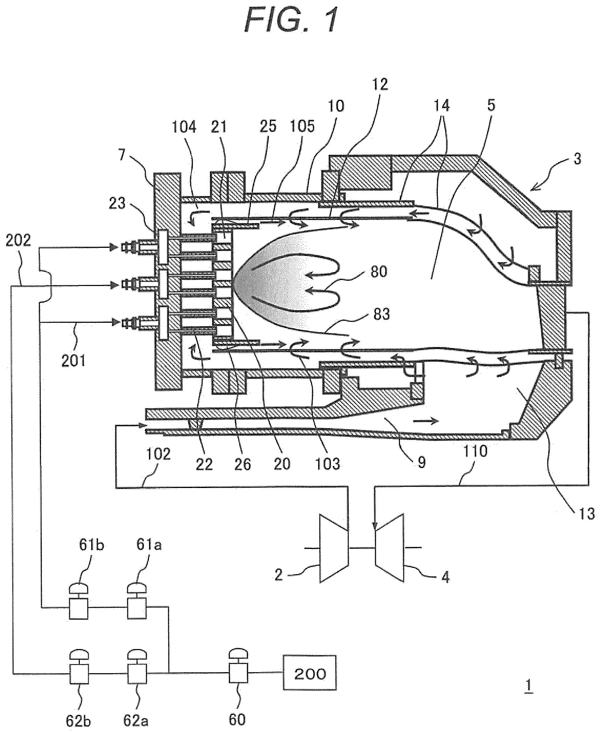

Fig. 1 is a whole configuration diagram illustrating a structure of a gas turbine combustor in a first example which is not part of the present invention.

In a gas turbine plant 1, compressed air 102 which is compressed by an air compressor 2 passes through a diffuser 9 and flows into a turbine casing 13. The compressed air 102 which flows into the turbine casing 13 passes through a flow sleeve of liner 14 and flows into between an outer casing 10 and a combustion liner 12. Some of the compressed air 102 flows into a combustion chamber 5 as cooling air 103 for the combustion liner 12.

The compressed air 102 which passes between the outer casing 10 and the combustion liner 12 passes through a spring seal 26 and is distributed to lip cooling air 105 which flows on the outer circumferential side of a plate lip 25 and combustion air 104 which flows into air holes 21 which are installed in an air hole plate 20 and spouts to the combustion chamber 5.

The combustion air 104 is mixed with a fuel (in the present example, a fuel which contains hydrogen, a so-called hydrogen-containing fuel) which spouts from fuel nozzles 22 and a mixture of the combustion air 104 and the fuel burn and form a flame 83 in the combustion chamber 5.

The gas turbine plant 1 burns the fuel in a gas turbine combustor (in the following, referred to as the combustor) 3, makes a generated high-temperature and highpressure combustion gas 110 flow into a turbine 4, rotates and drives the turbine 4 therewith and takes out rotational power of the turbine 4 as electric power.

A fuel supply system 201 and a fuel supply system 202 which supply the fuel to the fuel nozzles 22 are divided from a fuel supply system 200 which is equipped with a fuel shutoff valve 60.

In addition, the fuel supply system 201 and the fuel supply system 202 are equipped with a fuel pressure control valve 61a and a fuel pressure control valve 62a respectively and can be controlled individually. In addition, a fuel flow control valve 61b and a fuel flow control valve 62b are provided on their downstream sides respectively.

The combustor 3 is equipped with a plurality of the fuel nozzles 22 and the fuel nozzles 22 are connected to fuel headers 23 which distribute the fuel respectively. The fuel headers 23 are installed in an end cover 7 and the fuel is supplied to the fuel headers 23 from the fuel supply system 201 and the fuel supply system 202. Incidentally, although in the present example, the fuel is distributed to the two systems, it may be distributed to more systems.

When the fuel supply system is distributed to the plurality of ones in this way, a degree of freedom of operation can be increased owing to an increase in the number of the systems. Incidentally, the combustor 3 uses hydrogen-containing fuels such as a coke oven gas, an oil refinery off-gas, a coal gasification gas and so forth as the fuels and in addition many gases including liquefied natural gas (Liquefied Natural Gas: LNG) can be applied as the fuels. The fuels which are used in the present example are fuels which contain hydrogen, the so-called hydrogen-containing fuels.

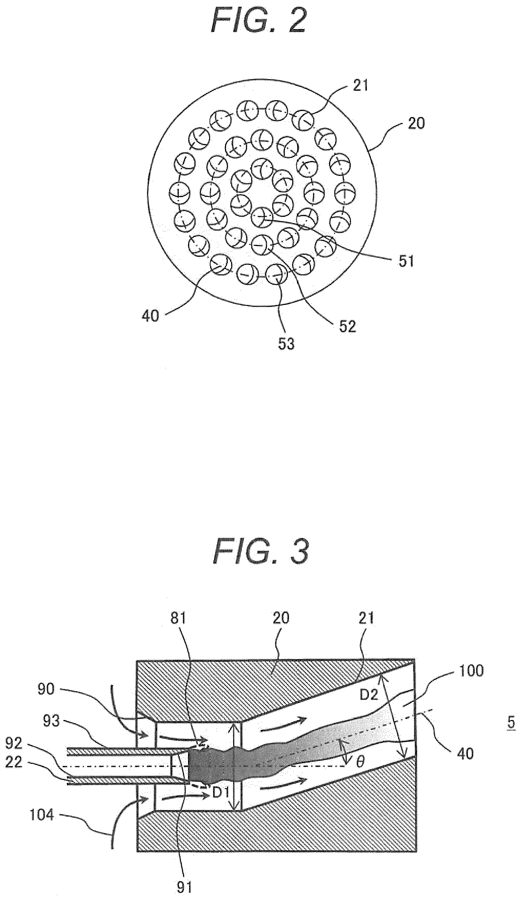

Fig. 2 is a front view of the air holes and the air hole plate in the first example

The plurality of air holes 21 are concentrically arranged around a central axis of the air hole plate 20 and are arranged in three lines (first-line air holes 51, second-line air holes 52, third-line air holes 53) in the present example. An air-hole central axis 40 of each air hole 21 is inclined in a pitch circumferential direction of each line and a swirling angle is given thereto in such a manner that swirling acts on the combustion air 104 which spouts out around the central axis of the air hole plate 20.

That is, the air hole plate 20 is located on the upstream side of the combustion chamber 5 and has the air holes 21 which are concentrically arranged plurally in line (in the present example, the three lines) and plurally in number (in the present example, six in the first line, twelve in the second line, eighteen in the third line).

Since the air hole plate 20 is coaxial with the combustion liner 12, swirling acts around a central axis of the combustion chamber 5 by exerting swirling on the combustion air 104, a recirculation flow 80 is formed and thereby the flame 83 can be stabilized (see Fig. 1).

Fig. 3 is a sectional diagram of one air hole in the first example and is an enlarged diagram of the air hole plate 20.

The air hole 21 is, an air hole tapered shape 90 is formed on an inlet part side of the air hole 21 and reduces a hole diameter of the air hole 21. Then, a hole diameter D2 of an outlet part of the air hole 21 is made not more than (preferably, smaller than) a hole diameter D1 which is reduced with the air hole tapered shape 90.

In addition, on a leading end part of the fuel nozzle 22, a fuel nozzle tapered shape 91 is formed on a fuel nozzle inner wall 92 and, on the leading end part of the fuel nozzle 22, a channel of the fuel becomes larger from the inside toward the outside. That is, the fuel nozzle inner wall 92 has the fuel nozzle tapered shape 91 which extends in the outer circumferential direction on the leading end part of the fuel nozzle 22. Incidentally, a leading end part of this fuel nozzle tapered shape 91 preferably has an acute angle shape. In addition, it is preferable that an angle of this fuel nozzle tapered shape be about 25° to 45°.

The combustion air 104 flows into the inlet part of the air hole 21 and annularly flows around a fuel nozzle outer wall 93. A fuel 100 which spouts from the fuel nozzle 22 flows through the center of the combustion air 104 which flows in an annular form and they form a coaxial jet flow in the combustion chamber 5.

That is, the fuel nozzles 22 are arranged coaxially with the air holes 21 and arranged plurally in line (in the present example, three lines) and plurally in number (in the present example, six in the first line, twelve in the second line, eighteen in the third line). Incidentally, the fuel nozzles 22 are arranged coaxially with the air holes 21 and thereby it becomes easier to mix the combustion air 104 with the fuel.

Then, the air hole 21 has an inclined channel, and an outlet-part channel of the air hole 21 is in the form of an inclined channel which has an angle θ relative to an inlet-part channel, and the coaxial jet flow of the fuel 100 and the combustion air 104 flows along the inclined channel of the air hole 21 without deviating from the air hole central axis 40 and spouts to the combustion chamber 5 through the outlet part of the air hole 21. The coaxial jet flow of the fuel 100 and the combustion air 104 which spouts from the air hole 21 conducts a combustion reaction and the flame 83 (not illustrated) is formed at the downstream of the air hole plate 20 in the combustion chamber 5.

In addition, a wake flow 81 is formed at the downstream of the leading end part of the fuel nozzle 22 and some of the fuel 100 and the combustion air 104 becomes a gas mixture and circulates therethrough.

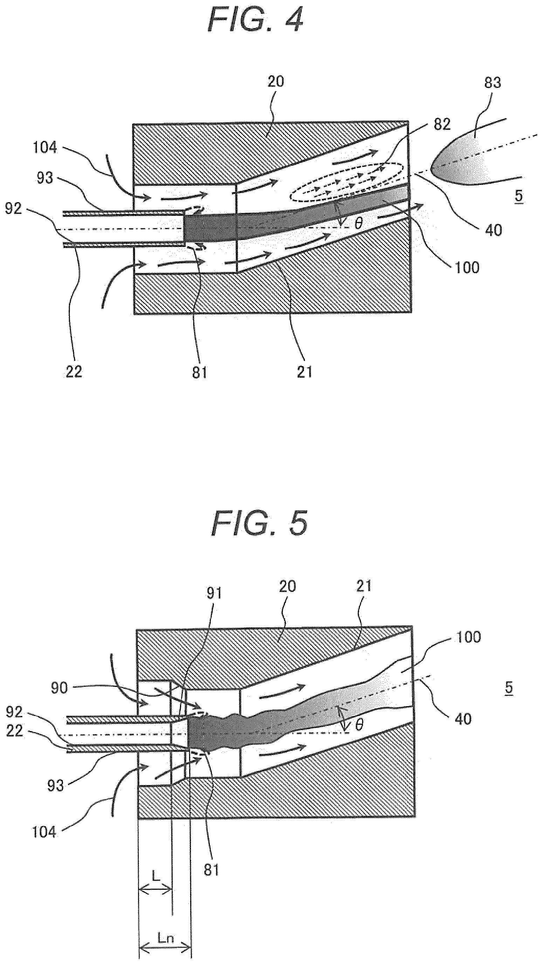

Fig. 4 is a sectional diagram of one air hole in a comparative example and an enlarged diagram of the air hole plate 20.

The comparative example illustrated in Fig. 4 is different in that the air hole tapered shape 90 is not formed on the inlet part of the air hole 21 and therefore the hole diameter is not reduced and that the fuel nozzle tapered shape 91 is not formed on the fuel nozzle inner wall 92 of the leading end part of the fuel nozzle 22 and the leading end part of the fuel nozzle 22 is, the fuel channel does not become larger from the inside toward the outside in comparison with the example illustrated in Fig. 3.

In the present comparative example, in a case where the momentum of the fuel 100 is high relative to the combustion air 104 which flows in the air hole 21, the fuel 100 cannot follow the combustion air 104 which flows through the inclined channel of the air hole 21, spouts out deviating from the air hole central axis 40 and forms a low flow velocity region 82 in the outlet part of the air hole 21.

Since, in the low flow velocity region 82, the gas mixture of the fuel 100 and the combustion air 104 flows at a low velocity, there is the possibility that a flame may be formed. In particular, in a case where the hydrogen-containing fuel is used in the combustor 3, hydrogen is low in minimum ignition energy which is necessary for ignition and is easy to ignite. Then, since a combustible range thereof is wide and a flame velocity thereof is high, the flame 83 which is formed in the combustion chamber 5 is easy to approach the air hole plate 20 and the possibility that a flame may be formed in the low flow velocity region 82 is high.

When the flame is formed in the low flow velocity region 82, there is the possibility that the flame may approach the fuel nozzle 22 along a boundary between the fuel 100 and the combustion air 104 and a flame may be formed also in the wake flow 81, and there is the possibility that inner walls of the fuel nozzle 22 and the air hole 21 may be overheated and the reliability of the combustor 3 may be lowered.

On the other hand, in the example illustrated in Fig. 3, the air hole tapered shape 90 is formed on the inlet part of the air hole 21 so as to reduce the hole diameter. Then, the hole diameter D2 of the outlet part of the air hole 21 is made not more than (preferably, smaller than) the hole diameter D1 which is reduced with the air hole tapered shape 90. Thereby, the flow velocity of the combustion air 104 which flows in the air hole 21 is increased.

Since a ratio of momentum of the fuel 100 to momentum of the combustion air 104 can be reduced by increasing the flow velocity of the combustion air 104, formation of the low flow velocity region 82 can be prevented. Further, since a flow velocity of the gas mixture of the fuel 100 and the combustion air 104 which spouts to the combustion chamber 5 can also be increased by reducing the hole diameter of the air hole 21, it becomes possible to keep the flame 83 which is formed in the combustion chamber 5 away from air hole plate 20.

Further, in the example illustrated in Fig. 3, the fuel nozzle tapered shape 91 is formed on the fuel nozzle inner wall 92 of the leading end part of the fuel nozzle 22 and, on the leading end part of the fuel nozzle 22, the fuel channel becomes larger from the inside toward the outside. That is, the fuel nozzle tapered shape 91 which extends in the outer circumferential direction is formed on the fuel nozzle inner wall 92 of the leading end part of the fuel nozzle 22. Thereby, a region where the wake flow 81 is formed is reduced.

Even in a case where the flame 83 enters the air hole 21 by reducing the region where the wake flow 81 is formed, the possibility that the flame may be formed in the wake flow 81 can be reduced.

In addition, since the flow velocity of the fuel 100 which spouts from the fuel nozzle 22 can be lowered and the momentum of the fuel 100 can be reduced by forming the fuel nozzle tapered shape 91 and increasing an area of a fuel spouting hole (preferably, by making a shape thereof acute-angled) as in the example illustrated in Fig. 3, formation of the low flow velocity region 82 can be prevented.

Since in the present example, the flame 83 which is formed at the downstream of the air hole plate 20 can be prevented from intruding into the air hole 21 and the flame 83 can be kept away from the air hole plate 20 in this way, the reliability of the combustor 3 can be improved.

Incidentally, even in a case where the inclined channel is not installed in the air hole 21, the region where the wake flow 81 is formed can be reduced and the possibility that the flame may be formed in the wake flow 81 can be reduced by installing the fuel nozzle tapered shape 91 on the leading end part of the fuel nozzle 22.

Fig. 5 is a sectional diagram of one air hole in an embodiment of the present invention and an enlarged diagram of the air hole plate 20.

The configuration illustrated in Fig. 5 is different in that the air hole tapered shape 90 is installed apart from the inlet part of the air hole 21 by a predetermined distance (a distance L) in comparison with the example illustrated in Fig. 3.

The air hole tapered shape 90 in the present example is installed at an installation position of the leading end part of the fuel nozzle 22 and thereby the combustion air 104 which flows into the air hole 21 can be accelerated on the leading end part of the fuel nozzle 22, a flow of the combustion air 104 can be made to go toward the fuel nozzle 22 and the flow of the combustion air 104 can be changed in addition to the operational effects which are the same as those of Example 1. The flow of the combustion air 104 which goes toward the fuel nozzle 22 acts on the wake flow 81 which is formed on the leading end part of the fuel nozzle 22 and thereby the region where the wake flow 81 is formed can be reduced, and even in a case where the flame approaches the wake flow 81, the combustion air 104 acts thereon as a shear flow and thereby formation of the flame in the wake flow 81 can be prevented.

Incidentally, it is preferable that the air hole tapered shape 90 in the present example be installed at a position where L < Ln is established relative to an insertion amount Ln by which the fuel nozzle 22 is inserted into the air hole 21. That is, the air hole tapered shape 90 in the present example is installed apart from the inlet part of the air hole 21 by the distance L and is installed on the upstream side of the leading end part (the insertion amount Ln) of the fuel nozzle 22 which is inserted into the air hole 21.

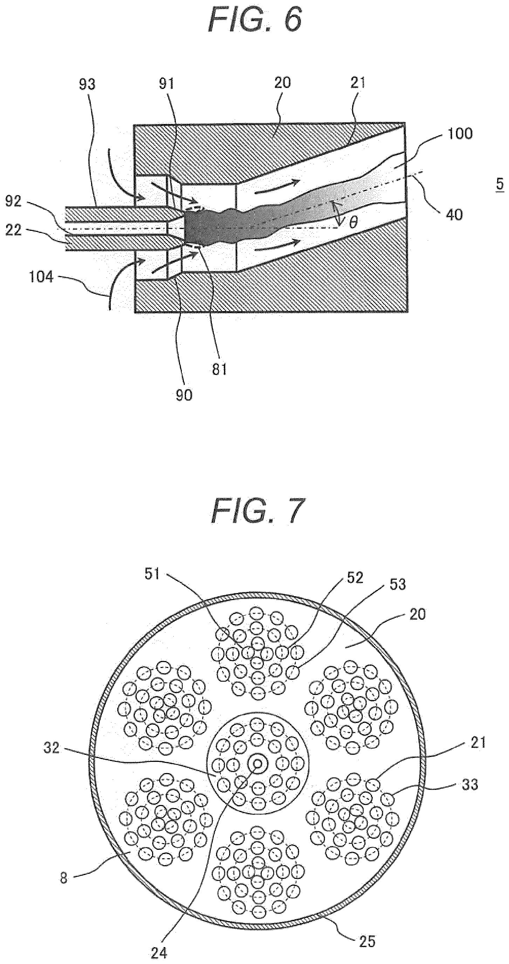

Fig. 6 is a sectional diagram of one air hole in an embodiment of the present invention and is an enlarged diagram of the air hole plate 20.

The embodiment illustrated in Fig. 6 is different in that the fuel nozzle tapered shapes 91 are formed on both of the fuel nozzle inner wall 92 and the fuel nozzle outer wall 93 on the leading end part of the fuel nozzle 22 in comparison with the embodiment illustrated in Fig. 5.

That is, the fuel nozzle inner wall 92 of the leading end part of the fuel nozzle 22 has the fuel nozzle tapered shape 91 which directs in the outer circumferential direction and further the fuel nozzle outer wall 93 of the leading end part of the fuel nozzle 22 has the fuel nozzle tapered shape 91 which directs in an inner circumferential direction. Incidentally, preferably, a leading end part of the fuel nozzle tapered shape 91 has an acute angle shape.

The fuel nozzle tapered shape 91 is installed also on the fuel nozzle outer wall 93 on the leading end part of the fuel nozzle 22 and thereby the outer diameter of the fuel nozzle 22 can be reduced, a channel area of an annular channel which is formed by an inner wall of the air hole 21 and the fuel nozzle outer wall 93 can be increased, and a flow rate of the combustion air 104 can be increased in addition to the operational effects which are the same as those of the second example.

In addition, since a leading end part of the fuel nozzle outer wall 93 is formed into a shape (an inwardly tapered shape) which directs toward the air hole central axis 40, a flow of the combustion air 104 which goes toward the fuel nozzle 22 can be guided directly to the wake flow 81 with the aid of the air hole tapered shape 90.

Incidentally, as a reference example, also in a case where the fuel nozzle tapered shape 91 is installed only on the fuel nozzle outer wall 93 (not illustrated), the flow of the combustion air 104 which goes toward the fuel nozzle 22 can be guided directly to the wake flow 81 without reducing the flow velocity of the fuel 100.

Fig. 7 is a front view of a combustor burner in a configuration which is not part of the present invention and the front view viewing the air nozzle plate 20 from the combustion chamber 5 side.

In the combustor 3 which is described in the present example, combustor burners (in the following, referred to as the burners) 8 which are configured by three lines of the air holes 21 and the fuel nozzles 22 (not illustrated) are arranged at the center by one and around it by six in order to cope with larger power generation outputs and more various operation forms.

The combustor which is described in the present example has a start-up fuel nozzle 24 in the center of the burner 8 which is installed at the center thereof. The burner 8 which is installed at the center is a central burner 32 and the burners 8 which are arranged around it are outer circumference burners 33.

That is, the combustor which is described in the present example is equipped with one central burner 32 which is located at the center of the combustor 3 and the six outer circumference burners 33 which are located outside of the central burner 32. The central axis of each air hole 21 is inclined in a pitch circumferential direction of each line, a flow which passes through the air hole 21 swirls helicoidally at the downstream of the air hole 21 and thereby a swirling flow is formed.

The central burner 32 and the outer circumference burners 33 are connected to three fuel systems in such a manner that fuel flow rates thereof can be controlled independently of one another. Although in the present example, the number of the outer circumference burners 33 is six, it is preferable that the outer circumference burners 33 be installed concentrically relative to the central burner 32 and it is preferable that the number thereof be three or more. The fuel systems are divided for every burner 8 and thereby fuel allocation for every burner 8 can be controlled in accordance with an operational state of the gas turbine plant.

The combustor 3 which is described in the present example has the central burner 32 and the outer circumference burners 33.

The central burner 32 is arranged at the center by one and has the air hole plate having the air holes which are concentrically arranged plurally in line (in the present example, three lines. The start-up fuel nozzle 24 is at the center) and plurally in number (in the present example, the start-up fuel nozzle 24 is at the center in the first line, eight in the second line, twelve in the third line), and the fuel nozzles which are arranged coaxially with the air holes plurally in line (in the present example, three lines. The start-up fuel nozzle 24 is at the center) and plurally in number (in the present example, the start-up fuel nozzle 24 is at the center in the first line, eight in the second line, twelve in the third line).

The outer circumference burners 33 are arranged concentrically around the central burner 32 plurally in number (in the present example, six) and, each have the air hole plates having the air holes which are arranged concentrically plurally in line (in the present example, three lines) and plurally in number (in the present example, four in the first line, eight in the second line, twelve in the third line), and the fuel nozzles which are arranged coaxially with the air holes plurally in line (in the present example, three lines) and plurally in number (in the present example, four in the first line, eight in the second line, twelve in the third line).

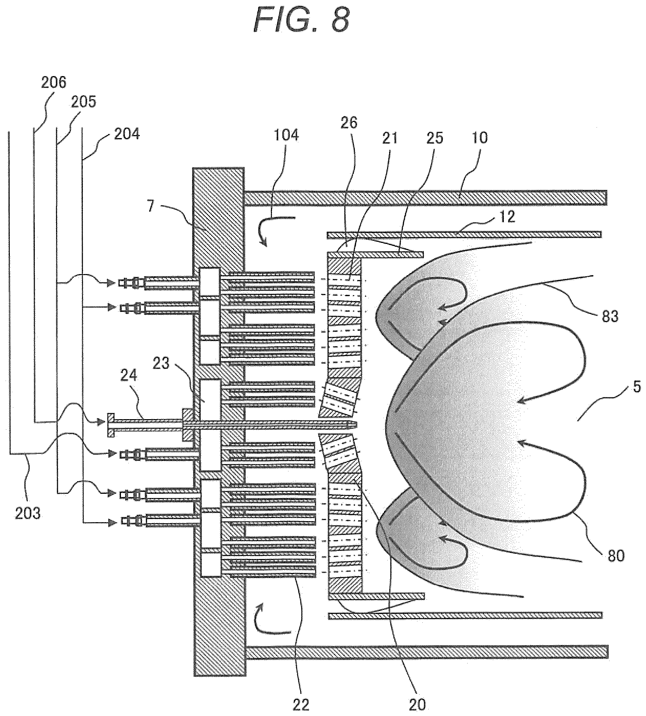

Fig. 8 is a sectional diagram of the combustor burner in a configuration which is not part of the present invention and the sectional diagram in an axial direction of the combustor.

In the present example, the plurality of air hole plates 20 are arranged thereby to configure one air hole plate 20.

A central burner fuel system 203 and a gas turbine start-up fuel system 206 are connected to the central burner 32 and are used mainly for a start-up operation of the gas turbine and are practically operated in order to ensure combustion stability of the entire of the combustor in load operation. Incidentally, in the present example, fuels which are supplied to the turbine start-up fuel system 206 are liquid fuels including diesel oil and heavy oil.

On the other hand, an outer circumference burner inner circumference fuel system 204 and an outer circumference burner outer circumference fuel system 205 are connected to the outer circumference burners 33. A group of the coaxial jet flows which is arranged on a first-line (the inner side) concentric circle of the outer circumference burner 33 forms flame holding and therefore is related to the combustion stability particularly. Accordingly, the flame holding can be strengthened and thereby stable combustion can be maintained for a wider load range by independently controlling the flow rate of the fuel which is supplied to the first line (the inner side) of the outer circumference burner 33 as in the present example.

In the present example, it has the air holes 21 and the fuel nozzles 22 which are arranged in the air hole plate 20 which is equipped with one central burner 32 and the six outer circumference burners 33, and the operational effects which are the same as those of Example 1 are obtained from the central burner 32 and the outer circumference burners 33 respectively.

Incidentally, in the present example, Example 1 is applied to all the air holes 21 and the fuel nozzles 22 in the central burner 32 and the outer circumference burners 33. However, if Example 1 is applied to one or more sets of the air holes 21 and the fuel nozzles 22, approach of the flame 83 which is formed on the outlet part of the air hole 21 and intrusion of the flame 83 into the air hole 21 can be prevented at a place to which it is applied.

In addition, although in the present example, the structure of Example 1 is applied to the air holes 21 and the fuel nozzles 22, the operational effects of the respective examples can be expected also in a case where the structures of Examples 2 and 3 are applied thereto.

### List of Reference Signs

1 ... gas turbine plant, 2 ... air compressor, 3 ... gas turbine combustor, 4 ... gas turbine, 5 ... combustion chamber, 7 ... end cover, 8 ... combustor burner, 9 ... diffuser, 10 ... outer casing, 12 ... combustion liner, 13 ... turbine casing, 14 ... flow sleeve of liner, 20 ... air hole plate, 21 ... air hole, 22 ... fuel nozzle, 23 ... fuel header, 24 ... start-up fuel nozzle, 25 ... plate lip, 26 ... spring seal, 32 ... central burner, 33 ... outer circumference burner, 40 ... air hole central axis, 51 ... first-line air hole, 52 ... second-line air hole, 53 ... third-line air hole, 60 ... fuel shutoff valve, 61a, 62a ... fuel pressure control valve, 61b, 62b ... fuel flow control valve, 80 ... recirculation flow, 81 ... wake flow, 82 ... low flow velocity region, 83 ... flame, 90 ... air hole tapered shape, 91 ... fuel nozzle tapered shape, 92 ... fuel nozzle inner wall, 93 ... fuel nozzle outer wall, 100 ... fuel, 102 ... compressed air, 103 ... cooling air, 104 ... combustion air, 105 ... lip cooling air, 110 ... combustion gas, 200, 201, 202 ... fuel supply system, 203 ... central burner fuel system, 204 ... outer circumference burner inner circumference fuel system, 205 ... outer circumference burner outer circumference fuel system, 206 ... gas turbine start-up fuel system.

## Claims

1. A gas turbine combustor comprising:
a combustion chamber (5) which burns a fuel and air;
an air hole plate (20) which is located on an upstream side of the combustion chamber (5) and has air holes (21) which are concentrically arranged plurally in line and plurally in number; and
fuel nozzles (22) which are arranged plurally in line and plurally in number coaxially with the air holes (21),
wherein an inlet part side of the air hole (21) has an air hole tapered shape (90) which reduces a hole diameter of the air hole (21)and wherein the air hole tapered shape (90) is installed apart from the inlet part of the air hole (21) by a predetermined distance (L), **characterized in that**
a fuel nozzle inner wall (92) on a leading end part of the fuel nozzle (22) has a fuel nozzle tapered shape (91) which extends in an outer circumferential direction on the leading end part of the fuel nozzle (22), and **in that**
the air hole tapered shape (90) is installed on the upstream side of the leading end part of the fuel nozzle (22).

2. The gas turbine combustor according to claim 1,
wherein a hole diameter of an outlet part of the air hole (21) is not more than the hole diameter of the air hole (21) which is reduced with the air hole tapered shape (90) .

3. The gas turbine combustor according to any one of claim 1 or claim 2,
wherein the air hole (21) has an inclined channel.

4. The gas turbine combustor according to any one of claim 1 to claim 3,
wherein a fuel nozzle outer wall (93) has a fuel nozzle tapered shape (91) which directs in an inner circumferential direction on the leading end part of the fuel nozzle (22).

5. The gas turbine combustor according to any one of claim 1 to claim 4,
wherein the fuel is a fuel which contains hydrogen.

6. The gas turbine combustor according to any one of claim 1 to claim 5,
wherein the fuel nozzles (22) are arranged coaxially with the air holes (21).

7. The gas turbine combustor according to any one of claim 1 to claim 6, comprising:
one central burner (32) which has an air hole plate (20) having air holes (21) which are concentrically arranged plurally in line and plurally in number and fuel nozzles (22) which are arranged coaxially with the air holes (21) plurally in line and plurally in number; and
a plurality of outer circumference burners (33) which are concentric around the central burner (32) and have air hole plates (20) having air holes (21) which are arranged concentrically plurally in line and plurally in number and fuel nozzles (22) which are arranged coaxially with the air holes (21) plurally in line and plurally in number.

## Patentansprüche

1. Gasturbinen-Brennkammervorrichtung, die Folgendes umfasst:
eine Brennkammer (5), die einen Brennstoff und Luft verbrennt;
eine Luftlochplatte (20), die auf einer Stromaufwärtsseite der Brennkammer (5) angeordnet ist und Luftlöcher (21) aufweist, die in mehreren Reihen und in Mehrzahl konzentrisch angeordnet sind; und
Brennstoffdüsen (22), die in mehreren Reihen und in Mehrzahl koaxial zu den Luftlöchern (21) angeordnet sind,
wobei eine Einlassabschnittsseite des Luftlochs (21) eine verjüngte Luftlochform (90) aufweist, die einen Lochdurchmesser des Luftlochs (21) verringert, und wobei die verjüngte Luftlochform (90) um einen vorgegebenen Abstand (L) vom Einlassabschnitt des Luftlochs (21) beabstandet installiert ist,
**dadurch gekennzeichnet, dass**
eine Brennstoffdüsen-Innenwand (92) auf einem vorderen Endabschnitt der Brennstoffdüse (22) eine verjüngte Brennstoffdüsenform (91) aufweist, die sich in einer Außenumfangsrichtung auf dem vorderen Endabschnitt der Brennstoffdüse (22) erstreckt, und
dass die verjüngte Luftlochform (90) auf der Stromaufwärtsseite des vorderen Endabschnitts der Brennstoffdüse (22) installiert ist.

2. Gasturbinen-Brennkammervorrichtung nach Anspruch 1,
wobei ein Lochdurchmesser eines Auslassabschnitts des Luftlochs (21) nicht größer als der Lochdurchmesser des Luftlochs (21) ist, der durch die verjüngte Luftlochform (90) verringert ist.

3. Gasturbinen-Brennkammervorrichtung nach einem der Ansprüche 1 oder 2,
wobei das Luftloch (21) einen geneigten Kanal aufweist.

4. Gasturbinen-Brennkammervorrichtung nach einem der Ansprüche 1 bis 3,
wobei eine Brennstoffdüsen-Außenwand (93) eine verjüngte Brennstoffdüsenform (91) aufweist, die auf dem vorderen Endabschnitt der Brennstoffdüse (22) in einer Innenumfangsrichtung orientiert ist.

5. Gasturbinen-Brennkammervorrichtung nach einem der Ansprüche 1 bis 4,
wobei der Brennstoff ein Brennstoff ist, der Wasserstoff enthält.

6. Gasturbinen-Brennkammervorrichtung nach einem der Ansprüche 1 bis 5,
wobei die Brennstoffdüsen (22) koaxial zu den Luftlöchern (21) angeordnet sind.

7. Gasturbinen-Brennkammervorrichtung nach einem der Ansprüche 1 bis 6, die Folgendes umfasst:
einen zentralen Brenner (32), der eine Luftlochplatte (20) mit Luftlöchern (21), die in mehreren Reihen und in Mehrzahl konzentrisch angeordnet sind, und Brennstoffdüsen (22), die in mehreren Reihen und in Mehrzahl koaxial zu den Luftlöchern (21) angeordnet sind, aufweist; und
mehrere Außenumfangsbrenner (33), die konzentrisch um den zentralen Brenner (32) angeordnet sind und Luftlochplatten (20) mit Luftlöchern (21), die in mehreren Reihen und in Mehrzahl konzentrisch angeordnet sind, und Brennstoffdüsen (22), die in mehreren Reihen und in Mehrzahl koaxial zu den Luftlöchern (21) angeordnet sind, aufweisen.

## Revendications

1. Unité de combustion de turbine à gaz comprenant :
une chambre de combustion (5) qui brûle un combustible et de l'air ;
une plaque à trous d'air (20) qui est située sur un côté amont de la chambre de combustion (5) et qui a des trous d'air (21) qui sont agencés concentriquement de manière plurielle en ligne et de manière plurielle en nombre ; et
des buses à combustible (22) qui sont agencées de manière plurielle en ligne et de manière plurielle en nombre coaxialement aux trous d'air (21),
dans laquelle un côté de partie d'entrée du trou d'air (21) a une forme effilée de trou d'air (90) qui réduit un diamètre de trou du trou d'air (21) et dans laquelle la forme effilée de trou d'air (90) est installée à l'écart d'une partie d'entrée du trou d'air (21) à raison d'une distance prédéterminée (L),
**caractérisée en ce que**
une paroi intérieure de buse à combustible (92) sur une partie d'extrémité de tête de buse à combustible (22) a une forme effilée de buse à combustible (91) qui s'étend dans une direction circonférentielle extérieure de la partie d'extrémité de tête de la buse à combustible (22), et
**en ce que** la forme effilée de trou d'air (90) est installée sur le côté amont de la partie d'extrémité de tête de la buse à combustible (22).

2. Unité de combustion de turbine à gaz selon la revendication 1,
dans laquelle un diamètre de trou d'une partie de sortie du trou d'air (21) n'est pas supérieur au diamètre de trou du trou d'air (21) qui est réduit avec la forme effilée de trou d'air (90).

3. Unité de combustion de turbine à gaz selon l'une quelconque des revendications 1 ou 2,
dans laquelle le trou d'air (21) a un canal incliné.

4. Unité de combustion de turbine à gaz selon l'une quelconque des revendications 1 à 3,
dans laquelle une paroi extérieure de buse à combustible (93) a une forme effilée de buse à combustible (91) qui est dirigée dans une direction circonférentielle intérieure de la partie d'extrémité de tête de la buse à combustible (22).

5. Unité de combustion de turbine à gaz selon l'une quelconque des revendications 1 à 4,
dans laquelle le combustible est un combustible qui contient de l'hydrogène.

6. Unité de combustion de turbine à gaz selon l'une quelconque des revendications 1 à 5,
dans laquelle les buses à combustible (22) sont agencées coaxialement aux trous d'air (21).

7. Unité de combustion de turbine à gaz selon l'une quelconque des revendications 1 à 6, comprenant :
un brûleur central (32) qui a une plaque à trous d'air (20) ayant des trous d'air (21) qui sont agencés concentriquement de manière plurielle en ligne et de manière plurielle en nombre et des buses à combustible (22) qui sont agencées coaxialement aux trous d'air (21) de manière plurielle en ligne et de manière plurielle en nombre ; et
une pluralité de brûleurs circonférentiels extérieurs (33) qui sont concentriques autour du brûleur central (32) et qui ont des plaques à trous d'air (20) ayant des trous d'air (21) qui sont agencés concentriquement de manière plurielle en ligne et de manière plurielle en nombre et des buses à combustible (22) qui sont agencées coaxialement aux trous d'air (21) de manière plurielle en ligne et de manière plurielle en nombre.
